Europäisches Patentamt

European Patent Office

Office européen des brevets

(11) Publication number: **0 271 993 B1**

(12) **EUROPEAN PATENT SPECIFICATION**

(45) Date of publication of patent specification: **16.09.92** (51) Int. Cl.⁵: **H01C 7/12**, H01C 17/22

(21) Application number: **87309979.0**

(22) Date of filing: **11.11.87**

(54) **Surge protection for telecommunications terminals.**

(30) Priority: **17.12.86 US 942771**

(43) Date of publication of application:
**22.06.88 Bulletin 88/25**

(45) Publication of the grant of the patent:
**16.09.92 Bulletin 92/38**

(84) Designated Contracting States:
**DE FR GB IT NL SE**

(56) References cited:
**US-A- 3 781 749**
**US-A- 4 197 521**

**ADVANCES IN INSTRUM., vol. 32, no. 2, 1977, pages 213-220, ISA, US; L.R. THOMAS: "Thick-film platinum resistance temperature detectors"**

(73) Proprietor: **NORTHERN TELECOM LIMITED**
**World Trade Center of Montreal, 380 St. Antoine Street West 8th Floor**
**Montreal, Ouebec H2Y 3Y4(CA)**

(72) Inventor: **Bender, David Kester**
**51 Willow Road**
**Tequesta Florida, 33469(US)**
Inventor: **Lathrop, Richard Reynolds, Jr.**
**12859 Sunset Blvd.**
**Royal Palm Beach Florida, 33411(US)**

(74) Representative: **Dupuy, Susan Mary et al**
**Northern Telecom Europe Limited Patents and Licensing West Road**
**Harlow Essex CM20 2SH(GB)**

## Description

### Background of the Invention

#### Field of the Invention

This invention relates to surge protection for components in a terminal, such as a telephone set. Protection is required against AC surges which can arise due to downed AC power lines falling across telephone lines, and other occurrences.

#### Related Art

Originally, such protectors comprised a wire wound resistor. However, an overload could cause the resistor to break down in a manner which is a fire hazard. Wire wound resistors were replaced by a thick film resistor printed onto a surface of a ceramic substrate. The substrate is at least 0.254cm (.1 inches) thick and the resistor is a continuous layer. To trim the resistor, the layer of resist material is abraded locally, the abrasion extending through the layer to the substrate.

Developments in materials and processes enable the substrate thickness to be reduced to 0.1524cm (.06 inches), but disadvantages such as 100% testing resulted.

The thickness of the substrate reflects the ability of the substrate to withstand the heating resulting from a surge. Normally, a thinner substrate will disintegrate at a lower surge voltage than a thicker substrate. The effect is amplified by variation in the distribution of the surge effect over the substrate area, with an associated non-symmetrical heating of the substrate.

From US-A-3 781 749 it is known to provide a double spiral form resistor in relation with a resistance thermometer.

### SUMMARY OF THE INVENTION

The present invention provides a surge protector which provides a substantially even distribution of the surge over the area of the substrate which carries the surge. The surge current, with the associated heating, is caused to flow evenly out to peripheries of the substrates. Broadly, the invention comprises a thin ceramic substrate on one surface of which is formed a surge protection resistor having a spiral path. The path is in the form of a double spiral having two thin parallel resistor paths, extending around the periphery of the substrate, spiralling inward towards the center. The central portions are connected by a plurality of space shorting members which provide for trimming the resistance value. In a particular arrangement, two such resistors are formed side-by-side on the one surface of the substrate.

### BRIEF DESCRIPTION OF THE DRAWINGS

The invention will be readily understood by the following description of certain embodiments, by way of example, in conjunction with the accompanying drawings, in which:

Figure 1 is a plan view on one surface of a form of the present surge protector;

Figure 2 is a plan view, greatly enlarged, of a form of surge protection member according to the present invention illustrating the resistor patterns;

Figure 3 is a plan view as in Figure 2, with the profile of a dielectric layer as applied to the pattern in Figure 2;

Figure 4 is a cross-section on the lines IV-IV of Figure 3;

Figures 5 and 6 are plan views on the opposite surfaces of a completed surge protector, showing two surge resistors on one surface and various thick-film devices on the other surface, respectively; and

Figure 7 is an illustration of one form of circuit embodying the invention.

### DETAILED DESCRIPTION OF THE EMBODIMENTS

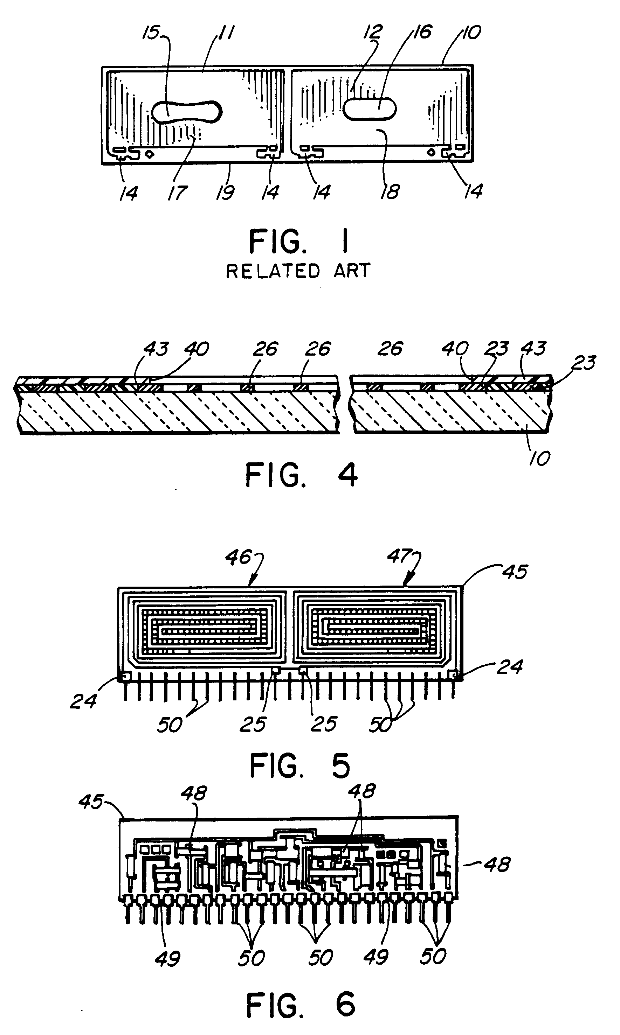

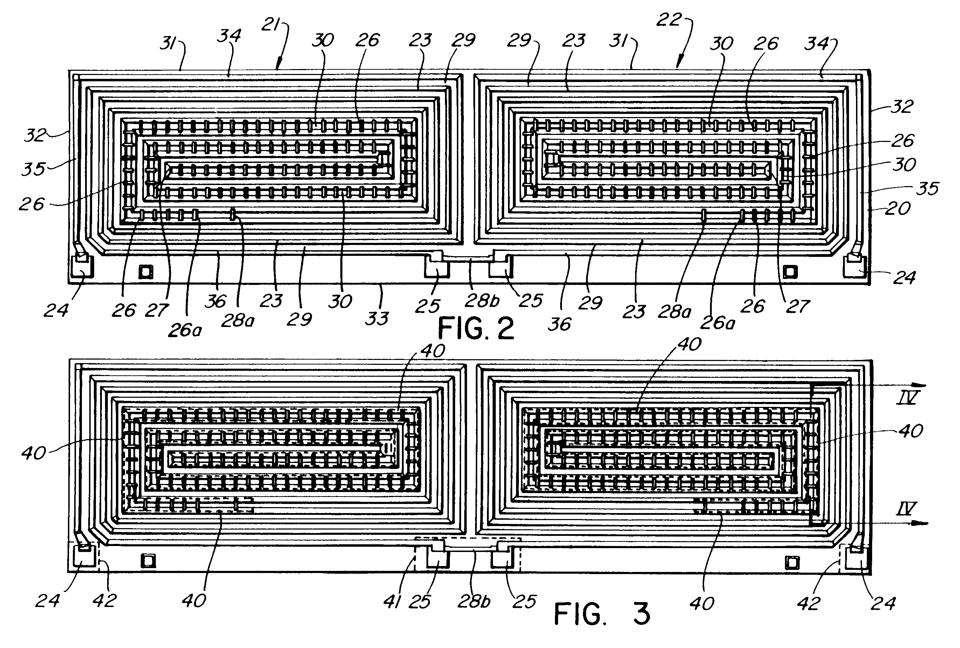

Illustrated in Figure 1 is one form of surge protector as presently used. A ceramic substrate 10 has two surge resistors 11 and 12 formed on one surface. For telecommunications systems, protection is required for both conducters of the conventional two wire loop or feed, the Tip conductor and the Ring conductor. Two surge resistors are formed on a common substrate. The two surge resistors 11, and 12, are of thick film form, formed by screen printing a layer of resistor material on the surface of the substrate 10. The resistor material overlies, at each end of a resistor pad 14.

Due to process and material limitations, it is not possible to form the resistor elements 11 and 12 at exactly the right resistance value. Therefore, the elements are formed with a value which is always slightly below the required value. The layer of resistor material is then abraded locally, as by sand abrasion, to bring the resistance up to the required value. The resistor material is abraded right through to the substrate, as illustrated in Figure 1. The abraded areas are indicated at 15 and 16. The values of the resistor elements must be within close limits of a stated datum and the two resistor elements must also be matched, or equal, to a very close limit.

A severe instability problem arises in the form of protector elements as illustrated in Figure 1.

Firstly, the surge loading, that is, the voltage and resultant current flow during surge conditions, is divided and concentrated in the two sections either side of the abraded areas 15 and 16. Added to this, because the connections are at one edge, a higher voltage and current flow occurs in the section closest to the connection edge, that is, in the sections 17 and 18. It will be appreciated that, even without the abrading at the areas 15 and 16, there would not be an even spread of the surge conditions across the elements because of the edge connections at 14. The highest loading would occur adjacent the edge 19 and would decrease across the element. Various imbalances occur, creating a thermal shock in the substrate, requiring a minimum substrate thickness, generally 2.6mm (.1 inches) or more.

With such a thickness, the substrates are manufactured individually. The resistor elements 11 and 12 are screen printed on substrates individually and then fused, which is slow and costly. To provide protection, the resistor elements are usually covered with a fused dielectric layer which again is applied individually. It is not generally acceptable to produce multiple protectors on larger substrates. Thick substrates cannot readily be divided by scoring and breaking. Process and material developments have provided some amelioration of the surge effects and permit reduction of the substrate thickness to 0.1524cm (.06 inches). However, because of the variation of the temperature of the substrate under surge conditions, with the possibility of disintegration, every protector is tested to the full range voltage as prescribed by specification. This is in the order of 450 volts AC RMS at 11 cycles at 60Hz.

A further stage of development was to provide a different resistor material, a thick film nitrogen firable material, to give improved heat dissipation. It was found that the substrate could be 0.1524cm (.06 inches) thick and testing of every resistor was not required. Because of the thinner substrate, it is possible to obtain substrates in larger sizes. A substrate size large enough to form six protectors can be obtained.

This appeared to be the limit. Disintegration still occurred at times and any further reduction in substrate thickness seemed unlikely. The abrasion trimming of the resistor elements still remained a slow, costly procedure and created a highly imbalanced thermal distribution over the substrate.

The present invention enables a major improvement by a complete break-away from previous practices. Instead of a layer of resistor material forming an element, a thin pattern or path arranged as a double spiral is used. Normally, a thin pattern or path would not be capable of sustaining a voltage surge, but be expected to rapidly burn out at the voltage surges. This is avoided by making the resistor pattern of a material which has a resistance, or conductance, between that of a resistor material and that of a conductor material. A resistor material, for example as used for the elements 11 and 12, typically has a value of about 10 ohms to 100 M ohms per square, depending upon requirements, while a conductor material typically has a resistance of between about 3 m ohms and 60 m ohms per square.

Figure 2 illustrates a completed surge protector having a ceramic substrate 20 and two resistor elements 21 and 22. Each resistor element is formed of a spiral path 23 which is doubled back on itself to form a double spiral. One end of the spiral path 23 ends at a contact area 24 and the other end of the spiral path ends at a contact area 25. To provide for trimming of the resistor value, a plurality of shorting links 26 extend from the inner end 27 of the spiral. The links 26 are spaced evenly apart and are cut sequentially from link 26a, which is furthest from the inner end 27. To provide for automated trimming, a further link 28a is provided in each spiral path and also a link 28b connects the two adjacent contact areas 25. The use of these links will be explained later.

In the example, with a nominal value of 200 ohms for each resistor element, there are 775 squares of resistor material in circuit before the cutting of the link 28a. A further 545 squares of resistor material are added in by cutting all of the links 26. Cutting link 28a makes about a 1 1/2% change in total resistor value and each further link adds in about .3 to .5% of the nominal 200 ohms resistance. This gives a total trimming potential of about 40%. The previous conventional resistors, as in Figure 1 for example, gave a maximum of about 17% trim. The process requires about 30% trim potential for a 90% yield to cater to all the variations in manufacture.

The various embodiments of the example of resistor path 23 in Figure 2 are as follows. The path width is 0.038cm (15 mil) and the spacing 29 between the paths is 0.044cm (17.5 mil) for that part of the spiral path outside the trim area. In the trim area, the path is 0.038cm (15 mil) wide and the spacing, 30, is 0.05cm (20 mil). The links are 0.025cm (10 mil) wide. The lengths of the path extending along the top edges 31, ends 32 and near the bottom edge 33, lengths 34, 35 and 36 respectively, can be made slightly wider, for example 0.05cm (20 mil). These dimensions can vary.

The term "squares" is used in the specification of sheet resistance values. It means that if a paste of 1000 ohms/square is screened into a 2.54cm (one inch) square resistor pattern, it will have a resistance of 1000 ohms from one side to the other. It will also be 1000 ohms from one side to the other if the resistor is one centimetre square or 0.0254cm (100 mil) square. The size is not important as long as the resistor is square. This is discussed in more detail in "Thick Film Technology" by Jeremy Agnew, published by Hayden Book Company, Inc. of New Jersey, particularly at pages 11, 12 and 13.

It will be appreciated that, whereas in the previous arrangements, as in Figure 1, resistance material is removed to raise the resistance of an element, in the present invention material is added to the resistance path to raise the resistance.

In the present invention, the resistor path extends very close to the top edge and end edges, right into the corners, and the elements are quite closely adjacent to each other. The path lengths which are always in circuit are at the peripheral areas. The special arrangement ensures that the surge effects extend uniformly, that is, there is not a concentration on one side of the element compared to the other as occurs with Figure 1.

Under surge conditions, with the heating up of the resistor, there is a temperature gradient through the thickness of the substrate and the substrate tends to curve. With the present invention, the curve extends for the full length of the substrate and substantially all of the width and is much more regular than in the example of Figure 1. When protectors are made in multiples from a single larger substrate, the large substrate is subdivided by laser scribing on the back surface followed by bending of the substrate. Slight cracks can occur at the edges as a result. The bending or curving of the substrate, under surge conditions, tends to close these cracks, improving the shock resistance of the substrate.

A variety of materials can be used for the resistor path, such as a ruthinium based material as sold by Electro-Science Laboratories Inc. of Pennsylvania, reference number 3900, and a silver based material as sold by Thick Film Systems Division of Ferro Corp. of Santa Barbara, California. The silver based material has been found very effective and is a mixture of silver and borosilicate glass, in paste form. The silver comprises about 50% by weight of the mixture, the remainder being borosilicate glass. Various small additions of other materials such as metal oxides, for example of copper, nickel, magnesium and zinc may be used to trim the final resistance value of the sintered resistor path. The basic proportions of silver and glass can be varied to vary the resistance of the resistor path.

Normally, after printing of the resistor paths and sintering or fusing of the material, a dielectric passivation layer is applied for protection. The layer extends completely over that part of the resistor pattern which does not have the links. A gap is formed over links 26, 28 and 29 and over the contact areas 24 and 25. This is illustrated in Figure 3, the openings indicated by dotted outline at 40 for the links 26 and 28, dotted outline 41 for link 29 and contact areas 25, and dotted outline 42 for contact areas 24. Both resistor material and dielectric are sintered or fused by conventional processes, e.g. at 850°C for about 10 minutes.

Figure 4 illustrates the dielectric layer at 43, extending over the outer paths 23, and exposing the links 26.

It is usual that additional components, such as thick film resistors and capacitors, are formed on the other surface of the substrate, the components being connected to a circuit pattern. Connections are made to the circuit pattern, and to the protector resistor elements, by terminals along one edge.

Figures 5 and 6 illustrate a protector, indicated generally at 45, having twin resistor elements 46 and 47 on one surface, the resistor elements being as in Figure 2, 3 and 4. On the other surface, components indicated at 48 are formed. Contact pads 49 are also formed and terminals 50 are attached, by soldering, to the pads 49. Appropriate terminals also connect to the contact areas 24 and 25 for the resistor elements.

Typical values for the resistor elements of a protector as exemplified are 200 ohms resistance ± .5%, with the two resistors matched to ± .5%. The temperature coefficient of resistance (TCR) is within the limits of about ± 100 ppm. With the present invention, a TCR within 40 ppm has been obtained regularly. The continuous power rating is 2000 mW. The thickness of the substrate is 0.1cm (.04 inches), with 0.0635cm (.025 inches) thickness also being possible. Substrates of 0.1cm (.04 inches) thick enable a large substrate of up to 12.7 by 15.24cm (5 by 6 inches) to be used, enabling fourteen protectors to be made per substrate. This thickness of substrate can readily be scored, as by a laser, and broken into separate protectors. The cost of substrates decreases with reduction in thickness and the cost of manufacture decreases with the increase in the number of protectors which can be made at one time.

A line or path width down to 0.0127cm (5 mil) and a spacing of 0.0127cm (5 mil) can be used. For resistor elements having a lower resistance, for example 100 ohms, wider lines and spaces can be used, for example 0.1cm (40 mil). Line or path widths and spacing from 0.0127cm (5 mil) to 0.254cm (100 mil) can be used, and the paths and spacing can be equal or not, as desired. A variety of line widths and spacing can be used, as in the particular example described above.

The use of a spiral resistor pattern having relatively narrow paths and spaces, which is contrary to what would be expected, together with trimming links, provides a surge protector having improved thermal characteristics under surge conditions. The resistors can be made to a high standard specification on relatively thin substrates. It enables the use of large area, e.g. 12.7 x 15.24cm (5" x 6"), substrate material already manufactured for thick film substrates, which use 0.1 and 0.0635cm (.04 and .025 inch) material. There is a much reduced likelihood of disintegration and minimal testing is required.

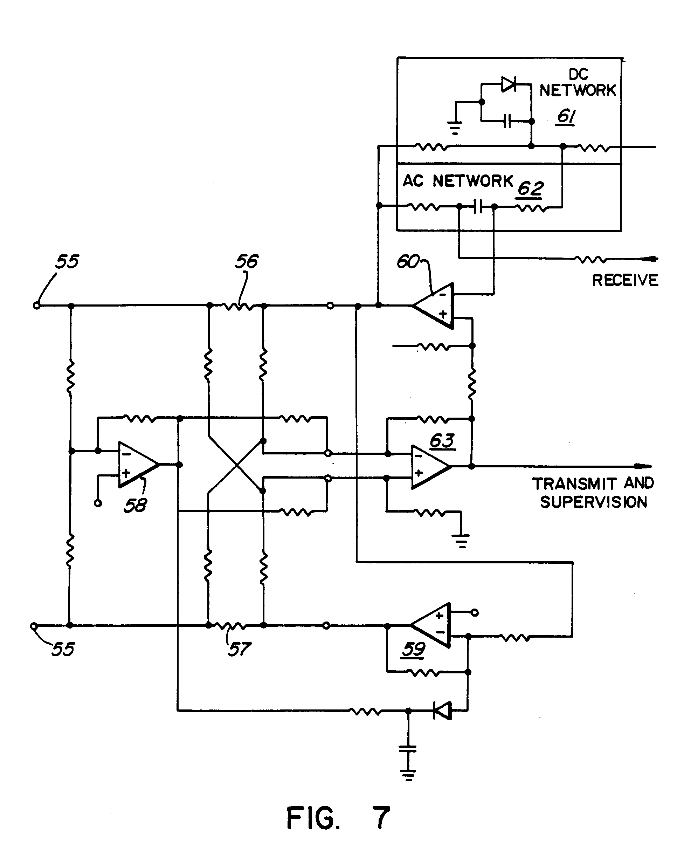

Figure 7 illustrates one form of line-card circuit as used in a telecommunications system. This circuit is described in more detail in U.S. patent 4,571,460, issued February 18, 1986, in the name of the present assignee. In the figure, connection to the telephone lines from the line card, is made at 55. The surge protection resistors, corresponding to resistor elements 21 and 22 of Figures 2 and 3, are indicated at 56 and 57 in Figure 7. The resistors 56 and 57 act to protect the circuit components against surges occuring on the telephone lines and inputting at the connections 55. Briefly describing other parts of the circuit in Figure 7, a DC amplifier is shown at 58, a ring amplifier circuit at 59, a tip amplifier is shown at 60, a DC network at 61, an AC network at 62 and a control circuit at 63.

The trimming of the resistors is carried out by a laser under the control of a controller, or computer. The substrate with resistor elements thereon is positioned in a holder and the trimming cycle started. Probes associated with the controller contact the contact areas 24 and 35, applying an electrical power source to the contacts. The laser beam is aligned with the space between the contact areas 25 and moves forward, normal to the edge of the substrate until it meets link 28b. The controller has detected a short between contact areas 25. The laser beam cuts across the link 28b. Immediately the link is cut, the controller detects the removal of the short and simultaneously has the location of the laser beam in relation to the resistor pattern along the axis, for convenience the Y axis, normal to the long edge of the substrate. The laser beam is switched off and the laser head is progressed along the Y axis until aligned with the space in which the links 28a are positioned. The laser head then moves along this space in one direction, for example to the right in Figure 2. The laser beam is switched on while traversing this gap and eventually comes to and cuts the link 28a. Immediately the link 28a is cut, the controller registers a change in resistance and simultaneously has the location of the laser beam in the direction parallel to the long edge of the substrate, and also relative to the pattern, for convenience the X axis. The laser is now completely orientated by the controller and can continue cutting links 28, until the controller detects that the correct resistance exists. The beam is shut off and the laser head is moved across to the space in which the other link 28a is positioned. The steps are repeated -beam on, link 28a cut, cutting detected and links 28 cut to give the correct value.

The invention has been described particularly to the advantages in that substrates of thinner material can be used. However, the invention can also be applied to normal, relatively thick, substrates as the advantages of ease of manufacture, particularly in the laser trimming, can be obtained.

While several embodiments of the invention have been described, it will be understood that it is capable of further modification, and this application is intended to cover any variations, uses, or adaptation of the invention, following in general the principles of the invention and including such departures from the present disclosure as to come within knowledge or customary practice in the art to which the invention pertains, and as may be applied to the essential features hereinbefore set forth and falling within the scope of the appended claims.

## Claims

1. A surge protector having substantially even distribution of surge effects, including heat distribution, over the area carrying the surge, comprising:
   a ceramic substrate (20);
   a spiral electrically resistive pattern (21, 22) formed on one surface of the ceramic substrate, the pattern being in the form of a double spiral having two physically parallel resistor paths (23), joined in series;
   the width of the path and the distance between adjacent path lengths being relatively narrow; and
   trimming means located at a central portion (27) of the spiral path for increasing the length of a resistive path, the trimming means comprising a plurality of shorting links (26) extending between the two physically parallel paths (23).

2. A surge protector as claimed in claim 1, wherein the two parallel resistor paths (23) extend around at least part of the periphery (31, 32, 33) of the substrate and spiral inward towards the center, to an inner end (27).

3. A surge protector as claimed in claim 2, wherein the two parallel paths are connected (26) at the inner end (27).

4. A surge protector as claimed in claim 3,

9 EP 0 271 993 B1 10

wherein said shorting links (26) are spaced at substantially equal distances apart.

5. A surge protector as claimed in claim 1, wherein said ceramic substrate (20) has a thickness of between about 0.0635cm (.025 inches) and 0.254cm (.100 inches).

6. A surge protector as claimed in claim 1, wherein said ceramic substrate (20) has a thickness of between about 0.0635cm (.025 inches) and 0.1cm (.04 inches).

7. A surge protector as claimed in claim 1, wherein each path (23) has a width between about 0.0127cm (5 mil) and 0.0254cm (100 mil).

8. A surge protector as claimed in claim 1, wherein said distance between adjacent path lengths is between about 0.127cm (5 mil) and 0.254cm (100 mil).

9. A surge protector as claimed in claim 1, wherein said path width and said distance between adjacent path lengths is substantially equal.

10. A surge protector as claimed in claim 1, wherein said distance between adjacent path lengths is wider than said path width.

11. A surge protector as claimed in claim 1, including a protection layer (43) over said spiral pattern (23).

12. A surge protector as claimed in claim 11, including means gaining access (40) to said trimming means.

13. A surge protector as claimed in claim 12, wherein said access gaining means are openings (40) in said protection layer (43).

14. The surge protector of claim 1 wherein a first parallel spiral path of electrically resistive material is doubled back on itself to form a second parallel spiral path of electrically resistive material.

**Patentansprüche**

1. Überspannungsableiter mit einer im wesentlichen gleichförmigen Verteilung von Überspannungswirkungen, unter Einschluß der Wärmeverteilung, über die Fläche, die die Überspannung führt, mit:

einem keramischen Substrat (20),

einem spiralförmigen elektrischen Widerstandsmuster (21, 22), das auf einer Oberfläche des Keramiksubstrates ausgebildet ist, wobei das Muster die Form einer Doppelspirale mit zwei körperlich parallelen Widerstandsbahnen (23) aufweist, die in Serie geschaltet sind,

wobei die Breite der Bahn und der Abstand zwischen benachbarten Bahnlängen relativ schmal ist, und

Abgleicheinrichtungen, die an einem Mittelbereich (27) der Spiralbahn angeordnet sind, um die Länge einer Widerstandsbahn zu vergrößeren, wobei die Abgleicheinrichtungen eine Vielzahl von Kurzschlußstegen (26) umfassen, die sich zwischen den beiden körperlich parallelen Bahnen (23) erstrecken.

2. Überspannungsableiter nach Anspruch 1, bei dem die beiden parallelen Widerstandsbahnen (23) sich um zumindestens einen Teil des Umfanges (31, 32, 33) des Substrates erstrecken und spiralförmig nach innen in Richtung auf den Mittelpunkt zu einem inneren Ende (27) hin verlaufen.

3. Überspannungsableiter nach Anspruch 2, bei dem die beiden parallelen Bahnen am inneren Ende (27) (bei 26) verbunden sind.

4. Überspannungsableiter nach Anspruch 3, bei dem die Kurzschlußstege (26) unter im wesentlichen gleichen Abständen voneinander angeordnet sind.

5. Überspannungsableiter nach Anspruch 1, bei dem das Keramiksubstrat (20) eine Dicke von zwischen ungefähr 0,0635 cm (0,025 Zoll) und 0,254 cm (0,100 Zoll) aufweist.

6. Überspannungsableiter nach Anspruch 1, bei dem das Keramiksubstrat (20) eine Dicke von zwischen ungefähr 0,0635 cm (0,025 Zoll) und 0,1 cm (0,04 Zoll) aufweist.

7. Überspannungsableiter nach Anspruch 1, bei dem jede Bahn (23) eine Breite zwischen ungefähr 0,0127 cm (5 mil) und 0,0254 cm (100 mil) aufweist.

8. Überspannungsableiter nach Anspruch 1, bei dem der Abstand zwischen benachbarten Bahnlängen zwischen ungefähr 0,127 cm (5 mil) und 0,254 cm (100 mil) liegt.

9. Überspannungsableiter nach Anspruch 1, bei dem die Bahnbreite und der Abstand zwischen benachbarten Bahnlängen im wesentlichen gleich ist.

**10.** Überspannungsableiter nach Anspruch 1, bei dem der Abstand zwischen benachbarten Bahnlängen größer als die Bahnbreite ist.

**11.** Überspannungsableiter nach Anspruch 1, der eine Schutzschicht (43) über dem spiralförmigen Muster (23) einschließt.

**12.** Überspannungsableiter nach Anspruch 11, der Einrichtungen einschließt, die einen Zugang (40) an die Abgleicheinrichtungen ergeben.

**13.** Überspannungsableiter nach Anspruch 12, bei dem die einen Zugang ermöglichenden Einrichtungen Öffnungen (40) in der Schutzschicht (43) sind.

**14.** Überspannungsableiter nach Anspruch 1, bei dem eine erste spiralförmige Bahn aus einem elektrischen Widerstandsmaterial auf sich selbst zurückgedoppelt ist, um eine zweite parallele Spiralbahn aus elektrisch leitendem Material zu bilden.

## Revendications

**1.** Organe de protection contre les surtensions assurant une distribution sensiblement uniforme des effets des surtensions, y compris une distribution de la chaleur dans la zone qui subit la surtension, comprenant :

　　un substrat céramique (20),

　　un dessin spiralé (21, 22) formant une résistance électrique et réalisé sur une surface du substrat céramique, le dessin étant sous forme d'une spirale double ayant deux trajets résistifs (23) physiquement parallèles, reliés en série,

　　la largeur du trajet et la distance entre les tronçons adjacents de trajet étant relativement faibles, et

　　un dispositif d'ajustement placé dans une partie centrale (27) du trajet spiralé et destiné à augmenter la longueur d'un trajet résistif, le dispositif d'ajustement comprenant plusieurs liaisons (26) de mise en court-circuit placées entre deux trajets physiquement parallèles (23).

**2.** Organe de protection contre les surtensions selon la revendication 1, dans lequel les deux trajets résistifs parallèles (23) sont disposés autour d'une partie au moins de la périphérie (31, 32, 33) du substrat et forment une spirale vers l'intérieur, vers le centre, vers l'extrémité interne (27).

**3.** Organe de protection contre les surtensions selon la revendication 2, dans lequel les deux trajets parallèles sont connectés (26) à l'extrémité interne (27).

**4.** Organe de protection contre les surtensions selon la revendication 3, dans lequel des liaisons (26) de mise en court-circuit sont espacées à des distances pratiquement égales.

**5.** Organe de protection contre les surtensions selon la revendication 1, dans lequel le substrat céramique (20) a une épaisseur comprise entre environ 0,0635 cm (0,025 pouce) et 0,254 cm (0,100 pouce).

**6.** Organe de protection contre les surtensions selon la revendication 1, dans lequel le substrat céramique (20) a une épaisseur comprise entre environ 0,0635 cm (0,025 pouce) et 0,1 cm (0,04 pouce).

**7.** Organe de protection contre les surtensions selon la revendication 1, dans lequel chaque trajet (23) a une largeur comprise entre environ 0,0127 cm (5 mil) et 0,254 cm (100 mil).

**8.** Organe de protection contre les surtensions selon la revendication 1, dans lequel la distance comprise entre les longueurs des trajets adjacents est comprise entre environ 0,0127 cm (5 mil) et 0,254 cm (100 mil).

**9.** Organe de protection contre les surtensions selon la revendication 1, dans lequel la largeur du trajet et la distance comprise entre les tronçons adjacents du trajet sont pratiquement égales.

**10.** Organe de protection contre les surtensions selon la revendication 1, dans lequel la distance comprise entre les tronçons adjacents du trajet est supérieure à la largeur du trajet.

**11.** Organe de protection contre les surtensions selon la revendication 1, comprenant une couche de protection (43) placée sur le dessin spiralé (23).

**12.** Organe de protection contre les surtensions selon la revendication 11, comprenant un dispositif donnant accès (40) au dispositif d'ajustement.

**13.** Organe de protection contre les surtensions selon la revendication 12, dans lequel le dispositif donnant accès est formé par des ouvertures (40) formées dans la couche de protection (43).

**14.** Organe de protection contre les surtensions selon la revendication 1, dans lequel un premier trajet parallèle d'un matériau résistif électriquement est replié sur lui-même pour la formation d'un second trajet spiralé parallèle d'un matériau électriquement résistif.

FIG. 1

RELATED ART

FIG. 4

FIG. 5

FIG. 6

FIG. 2

FIG. 3

FIG. 7